Europäisches Patentamt

European Patent Office

Office européen des brevets

Veröffentlichungsnummer: **0 274 619**

**A1**

# EUROPÄISCHE PATENTANMELDUNG

Anmeldenummer: 87117081.7

Anmeldetag: 19.11.87

Int. Cl.⁴ **A01B 33/12**

Priorität: 02.12.86 DE 3641081

Veröffentlichungstag der Anmeldung:
**20.07.88 Patentblatt 88/29**

Benannte Vertragsstaaten:
**DE FR GB IT NL**

Anmelder: **Amazonen-Werke H. Dreyer GmbH & Co. KG
Am Amazonenwerk 9-13
D-4507 Hasbergen-Gaste(DE)**

Erfinder: **Gattermann, Bernd
Eichenwall 3
D-2872 Hude I O.(DE)**

## Kreiselegge.

Kreiselegge mit jeweils seitlich neben den äußeren Werkzeugkreiseln angeordneten und die Verlagerung der von den Werkzeugen der äußeren Werkzeugkreisel nach außen bewegte Erde verhindernden Seitenschilde und mit einer hinter den Werkzeugkreiseln angeordneten und sich über die Arbeitsbreite der Kreiselegge erstreckenden Nachlaufwalze wobei zwischen den Werkzeugkreiseln und der Nachlaufwalze ein sich über die gesamte Arbeitsbreite der Kreiselegge erstreckendes Planierschild befindet. Um die gattungsgemäße Kreiselegge derart zu verbessern, daß auch unter schwierigsten Bedingungen mit einfachsten Mitteln ein über die gesamte Arbeitsbreite ebenes und homogenes Saatbett geschaffen wird, ist vorgesehen, daß an den beiden Enden des Planierschildes (7) jeweils zusätzlich zu den neben den äußeren Werkzeugkreiseln angeordneten Seitenschilde (6) weitere Begrenzungsschilde (9) angeordnet sind, welche in Fahrtrichtung über die hinteren Enden der Seitenschilde (6) nach vorn hinausragen sowie mit ihrem hinteren Bereich hinter der vordern Kante der Nachlaufwalze (2) enden.

FIG. 1

# Kreiselegge

Die Erfindung betrifft eine Kreiselegge gemäß des Oberbegriffes des Patentanspruches 1.

Eine derartige Kreiselegge ist bereits durch die deutsche Offenlegungsschrift 27 49 148 bekannt. Bei dieser Kreiselegge ist hinter den Kreiselwerkzeugen eine Nachlaufwalze angeordnet. Zwischen der Nachlaufwalze und den Kreiselwerkzeugen der Kreiselegge ist am Tragrahmen der Kreiselegge ein in der Höhe verstellbares Planierschild angeordnet. Mit Hilfe dieses Planierschildes werden die von den Kreiselwerkzeugen erzeugten Erdwälle wieder eingeebnet, so daß über die gesamte Arbeitsbreite der Kreiselegge ein gleichmäßig ebenes und gleichmäßig verfestigtes Saatbett geschaffen wird. Neben den äußeren Kreiseln der Kreiselegge sind aufrechtstehende und sich parallel zur Fahrtrichtung erstreckende Seitenschilde angeordnet, die die seitliche Verlagerung von Boden durch die Kreiselwerkzeuge verhindern.

Von Nachteil ist bei dieser bekannten Kreiselegge, daß die hinteren Kanten dieser Seitenschilde nicht bis zur vorderen Kante der auf dem Boden aufstehenden Teile der Nachlaufwalze reichen. Dadurch kann seitlich Erde aus den Seitenschilden austreten und an der äußeren Kante der Nachlaufwalze vorbei nach außen fließen. Hierdurch entstehen seitliche Erdwälle, die nachteilig sind, weil diese Erdwälle sich auf dem bereits eingesäten Boden befinden, so daß das im Boden abgelegte Saatgut mit einer dicken Erdschicht dieser Erdwälle zugedeckt wird.

Zwar sind weiterhin noch zusätzliche Seitenplatten auf der Außenseite der ersten Seitenplatten angeordnet, die sich nach hinten über die Nachlaufwalze hinaus erstrecken. Aber diese Seitenplatten befinden sich in einem zu großen Abstand zu den äußeren Kanten der Nachlaufwalze, so daß immer noch an der Nachlaufwalze vorbei Erde nach außen fließen kann, so daß keinesfalls die Entstehung von seitlichen Erdwällen neben der Maschine verhindert werden kann.

Des weiteren reicht zwar die innere Seitenplatte jeweils nach hinten über die Planierschiene hinaus, aber zwischen den äußeren Enden der Planierschiene und den Seitenplatten befindet sich jeweils ein beträchtlicher Zwischenraum, so daß die Erde seitlich an der Planierschiene in Form eines großen Erdwalles vorbeifließen kann, so daß jeweils im Außenbereich Erdwälle entstehen, die anschließend zumindest teilweise von der Walze angedrückt werden, so daß im äußeren Bereich stärker verfestigte Bereiche entstehen, was von erheblichem Nachteil ist.

Darüber hinaus ist durch die frz. Offenlegungsschrift 78 04 046 (Publikations-Nr.: 24 16 634) eine Bodenbearbeitungsmaschine mit einer Nachlaufwalze bekannt geworden, wobei zwischen der Bodenbearbeitungsmaschine und der Nachlaufwalze ein Planierschild angeordnet ist, welches den von den Bodenbearbeitungswerkzeugen der Bodenbearbeitungsmaschine aufgebrochenen Boden wieder einebnet. An den äußeren Enden dieses Planierschildes sind jeweils unter einem stumpfen Winkel zur Fahrtrichtung angestellte Einebnungselemente angeordnet, die den seitlich austretenden Erdwall nach hinten schieben. Durch dieses nach innen Schieben wird zwar ein seitlich sich der Maschine ausbildender Erdwall verhindert, aber gleichzeitig wird derart viel Erde über diese Bleche nach innen geschoben, so daß im äußeren Bereich unerwünschte verdichtete Zonen entstehen, was ebenfalls äußerst nachteilig ist.

Der Erfindung liegt die Aufgabe zugrunde, die gattungsgemäße Kreiselegge derart zu verbessern, daß auch unter schwierigsten Bedingungen mit einfachsten Mitteln ein über die gesamte Arbeitsbreite ebenes und homogenes Saatbett geschaffen wird.

Diese Aufgabe wird erfindungsgemäß durch die kennzeichnenden Merkmale des Patentanspruches 1 gelöst.

Infolge dieser Maßnahmen wird erreicht, daß die sich unmittelbar an die - vorzugsweise ohne Zwischenraum - Enden des Planierschildes anschließenden Begrenzungsschilde eine seitliche Verlagerung der Erde über die Breite der Planierschiene hinaus nach außen verhindern, so daß keine Erdwälle entstehen können. Vielmehr wird durch die Anordnung der Begrenzungsschilde, die sich unmittelbar an den Enden der Planierschilde angeordnet sind, so daß sich kein Zwischenraum zwischen den Innenseiten der Begrenzungsschilde und den Enden der Planierschilde befindet, erreicht, daß die von den Kreiselwerkzeugen aufgebrochene Erde von der Planierschiene gleichmäßig eingeebnet wird, so daß sich über die gesamte Arbeitsbreite der Maschine eine gleichmäßige Bodenfestigkeit ergibt.

Erfindungsgemäß ist vorgesehen, daß die Begrenzungsschilde sich auf der Innenseite der Seitenschilde nach vorn erstrecken. Hierdurch wird in vorteilhafter Weise ermöglicht, daß die um eine in Fahrtrichtung verlaufende Achse gegen eine Federkraft ausweichbar angeordneten Seitenschilde weiterhin nach außen ausweichen können, wenn Steine oder andere harte Gegenstände zwischen den Werkzeugen der äußeren Werkzeugkreisel und den Seitenschilden gelangen.

Des weiteren ist vorgesehen, daß die Begrenzungsschilde starr an dem Planierschild angeordnet sind. Hierdurch wird erreicht, daß in jedem Falle keine Erde zwischen den Enden des Planierschildes und dem Begrenzungsschild vorbeifließen kann.

Eine einfache Befestigung des Planierschildes ergibt sich dadurch, daß das Planierschild mit den Begrenzungsschilden an dem Rahmen der Nachlaufwalze befestigt ist.

Dadurch, daß die Begrenzungsschilde gemeinsam mit dem Planierschild gegenüber der Nachlaufwalze in der Höhe verstellbar sind, wird erreicht, daß jeweils in einfacher Weise sowohl die Begrenzungsschilde als auch das Planierschild auf die jeweiligen Einsatzbedingungen eingestellt werden können. Diese Einstellungsmöglichkeit wird noch dadurch verbessert, daß das Planierschild gegenüber dem Begrenzungsschild in der Höhe verstellbar ist.

Damit keine verfestigten Bereiche bzw. keine Komprimierung der Erde in den Außenbereichen der Arbeitsbreite der Kreiselegge auftreten, ist erfindungsgemäß vorgesehen, daß die Begrenzungsschilde zumindest annähernd parallel zur Fahrtrichtung ausgerichtet sind.

Weitere Einzelheiten der Erfindung sind der Beispielsbeschreibung und den Zeichnungen zu entnehmen. Hierbei zeigen

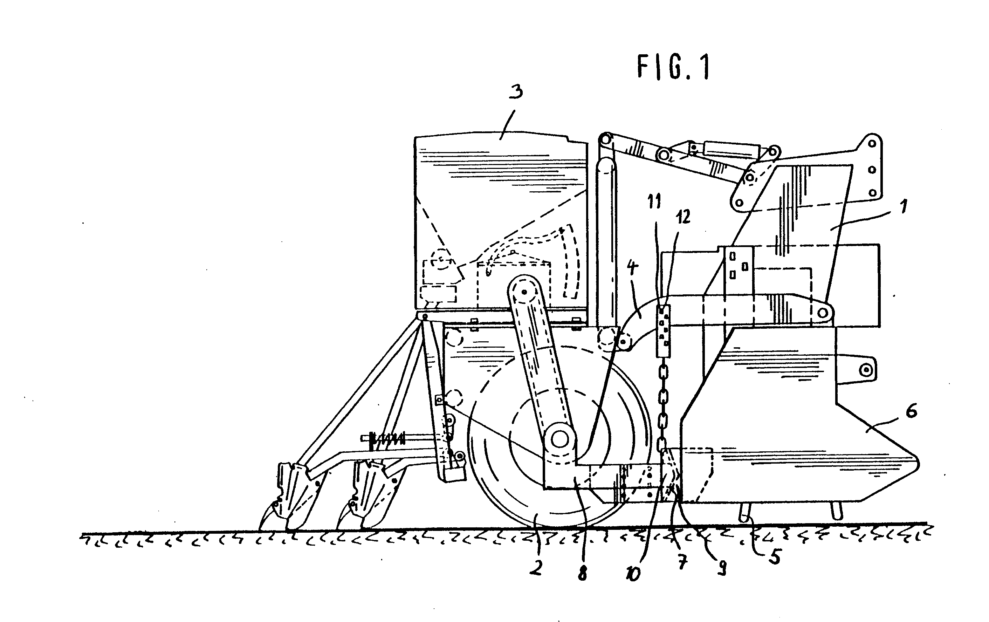

Fig. 1 eine Kreiselegge, die Bestandteil einer Gerätekombination ist, in der Seitenansicht und

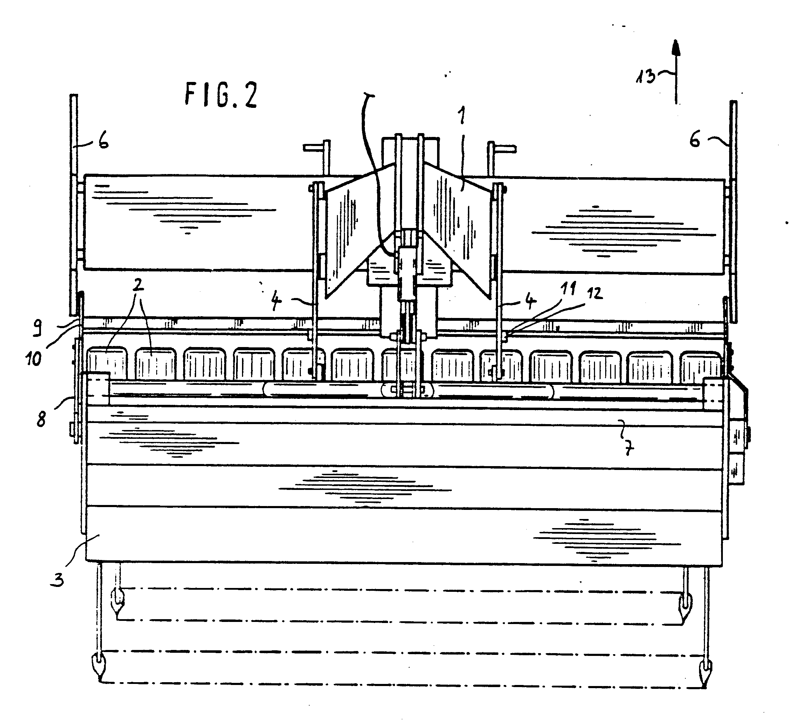

Fig. 2 die Gerätekombination in der Draufsicht.

Die Gerätekombination besteht aus der Kreiselegge 1, der hinter der Kreiselegge 1 angeordneten Bodenwalze 2 und der auf der Bodenwalze aufgesattelten Drillmaschine 3. Die Bodenwalze 2 ist über die Tragarme 4 mit der Kreiselegge 1 verbunden. Die Bodenwalze 2 bestimmt die Eindringtiefe der Werkzeuge 5 der Kreiselegge 1 in den Boden. Neben den äußersten Werkzeugkreiseln der Kreiselegge 1 sind die Seitenschilde 6 angeordnet, die eine Verlagerung der von den Werkzeugen der äußeren Werkzeugkreisel nach außen bewegte Erde verhindern.

Zwischen den Werkzeugen 5 der Kreiselegge 1 und der Nachlaufwalze 2 ist das Planierschild 7 angeordnet, welches sich über die gesamte Arbeitsbreite der Kreiselegge 1 erstreckt. Das Planierschild 7 ist mittels der Tragarme 8 an der Bodenwalze befestigt. Des weiteren sind an den äußeren Enden des Planierschildes 7 jeweils die Begrenzungsschilde 9 angeordnet. Diese Begrenzungsschilde 9 sind derart dem Planierschild 7 zugeordnet, daß sich kein Abstand zwischen den äußeren Enden des Planierschildes 7 und der Innenseite der Begrenzungsschilde 9 befindet, so daß keine Erde zwischen den Begrenzungsschilden 9 und den Enden des Planierschildes 7 hindurchfließen kann. Die Begrenzungsschilde 9 sind starr an dem Planierschild bzw. dem Träger 8 angeordnet. Des weiteren sind die Begrenzungsschilde 9 gegenüber dem Planierschild 7 aufgrund der verschiedenen Löcher und der Schrauben 10 gegenüber dem Planierschild in der Höhe verstellbar. Des weiteren sind die Begrenzungsschilder 9 gemeinsam mit dem Planierschild 7 gegenüber der Nachlaufwalze in der Höhe verstellbar, in dem das Lochblech 11 entsprechend auf dem Bolzen 12, der an dem Tragarm 4 befestigt ist, eingehängt wird.

Des weiteren sind die Begrenzungsschilde 9 parallel zur Fahrtrichtung 13 ausgerichtet. Die Begrenzungsschilde erstrecken sich auf der Innenseite der Seitenschilde nach vorn, so daß die Seitenschilde, falls sie seitlich ausweichbar angeordnet sind, weiterhin nach außen ausweichen können, wenn ein Stein zwischen das Seitenschild 6 und das Bodenbearbeitungswerkzeug 5 gerät. Darüber hinaus ist dieses Begrenzungsschild 9 zusätzlich zu den Seitenschilden 6 vorgesehen. Diese Begrenzungsschilde 9 erstrecken sich in Fahrtrichtung 12 gesehen über die hinteren Enden der Seitenschilde 6 nach vorn, so daß sie die vorderen Enden der Begrenzungsschilde 9 über die hinteren Enden der Seitenschilde 6 nach vorn hinausragen. Des weiteren enden die Begrenzungsschilde 9 mit ihrem hinteren Bereich hinter der vorderen Kante der Nachlaufwalze 2.

Die Funktionsweise des Planierschildes 7 in Verbindung mit den Begrenzungsschilden 9 ist folgende:

Durch das Planierschild 7 werden die über die Arbeitsbreite der Kreiselegge nebeneinanderliegende Erdwälle, die von dem von den Werkzeugen 5 der Kreiselegge 1 aufgebrochenen und gekrümelten Boden gebildet werden, wieder gleichmäßig eingeebnet, so daß ein ebenes und homogenes Saatbett durch das Planierschild 7 geschaffen wird. Durch die Begrenzungsschilde 9, die die Seitenschilde 6 nach vorn überlappen, sowie den vorderen Kantenbereich der Nachlaufwalze 2 nach hinten überlappen, wird verhindert, daß ein Seitenwall durch Herauslaufen der Erde an den Enden des Planierschildes 7 bzw. hinter den Seitenschilden 6, entstehen kann. Somit kann keine Erde nach außen über die Arbeitsbreite, die von den Seitenschilden 6 und den Begrenzungsschilden 9 bestimmt bzw. begrenzt wird hinauslaufen und so auch kein in dem anschließenden Saatbeet abgelegtes Saatgut mit Erde bedecken.

**Ansprüche**

1. Kreiselegge mit jeweils seitlich neben den äußeren Werkzeugkreiseln angeordneten und die Verlagerung der von den Werkzeugen der äußeren Werkzeugkreisel nach außen bewegte Erde verhindernden Seitenschilde und mit einer hinter den Werkzeugkreiseln angeordneten und sich über die Arbeitsbreite der Kreiselegge erstreckenden Nachlaufwalze, wobei zwischen den Werkzeugkreiseln und der Nachlaufwalze ein sich über die gesamte Arbeitsbreite der Kreiselegge erstreckendes Planierschild befindet, dadurch gekennzeichnet, daß an den beiden Enden des Planierschildes (7) jeweils zusätzlich zu den neben den äußeren Werkzeugkreiseln angeordneten Seitenschilde (6) weitere Begrenzungsschilde (9) angeordnet sind, welche in Fahrtrichtung (13) über die hinteren Enden der Seitenschilde (6) nach vorn hinausragen sowie mit ihrem hinteren Bereich hinter der vordern Kante der Nachlaufwalze (2) enden.

2. Kreiselegge nach Anspruch 1, dadurch gekennzeichnet, daß die Begrenzungsschilde (9) sich auf der Innenseite der Seitenschilde (6) nach vorn erstrecken.

3. Kreiselegge nach Anspruch 1, dadurch gekennzeichnet, daß die Begrenzungsschilde (9) starr an dem Planierschild (7) angeordnet sind.

4. Kreiselegge nach Anspruch 1, dadurch gekennzeichnet, daß das Planierschild (7) mit den Begrenzungsschilden (9) an dem Rahmen der Nachlaufwalze (2) befestigt ist.

5. Kreiselegge nach Anspruch 1, dadurch gekennzeichnet, daß die Begrenzungsschilder (9) gemeinsam mit dem Planierschild (7) gegenüber der Nachlaufwalze (2) in der Höhe verstellbar sind.

6. Kreiselegge nach Anspruch 4, dadurch gekennzeichnet, daß das Planierschild (7) gegenüber dem Begrenzungsschild (9) in der Höhe verstellbar ist.

7. Kreiselegge nach Anspruch 1, dadurch gekennzeichnet, daß die Begrenzungsschilde (9) zumindest annähernd parallel zur Fahrtrichtung (13) ausgerichtet sind.

Amazonen - Werke H. Dreyer GmbH & Co. KG

# FIG. 1

0 274 619

FIG. 2

Amazonen - Werke H. Dreyer GmbH & Co. KG

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 564 687 (RABEWERK) <br> * Seite 6, Zeile 1 - Seite 7, Zeile 36; Figuren 1-3 * <br> --- | 1-5,7 | A 01 B 33/12 |
| Y,D | FR-A-2 416 634 (CRETE-GUERIN) <br> * Insgesamt * <br> --- | 1-5,7 | |
| A | EP-A-0 182 162 (AMAZONEN) <br> --- | | |
| A,D | US-A-4 088 083 (VAN DER LELY) <br> & DE-A-27 49 148 <br> ----- | | |

RECHERCHIERTE SACHGEBIETE (Int. Cl.4)

A 01 B

Der vorliegende Recherchenbericht wurde für alle Patentansprüche erstellt

| Recherchenort | Abschlußdatum der Recherche | Prüfer |
|---|---|---|
| DEN HAAG | 15-03-1988 | VON ARX V.U. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...........................................................................
& : Mitglied der gleichen Patentfamilie, übereinstimmendes
    Dokument

EPO FORM 1503 03.82 (P0403)